(19) Europäisches Patentamt
European Patent Office
Office européen des brevets

(11) **EP 3 682 320 B1**

(12) **FASCICULE DE BREVET EUROPEEN**

(45) Date de publication et mention de la délivrance du brevet:
**06.03.2024 Bulletin 2024/10**

(21) Numéro de dépôt: **18745972.2**

(22) Date de dépôt: **02.08.2018**

(51) Classification Internationale des Brevets (IPC):
**G06F 3/147** *(2006.01)*        **B60R 1/00** *(2022.01)*
**B60R 1/10** *(2006.01)*        **H04N 5/00** *(2011.01)*

(52) Classification Coopérative des Brevets (CPC):
**G06F 3/147; B60R 1/00; H04N 23/698;**
**H04N 23/90;** B60R 2300/105; B60R 2300/607;
B60R 2300/70; B60R 2300/8093; G09G 2340/10;
G09G 2340/125; G09G 2380/10

(86) Numéro de dépôt international:
**PCT/EP2018/070963**

(87) Numéro de publication internationale:
**WO 2019/052739 (21.03.2019 Gazette 2019/12)**

(54) **PROCÉDÉ D'AFFICHAGE SUR UN ÉCRAN D'UN ENVIRONNEMENT D'UN VÉHICULE AUTOMOBILE, ET VÉHICULE AUTOMOBILE DANS LEQUEL UN TEL PROCÉDÉ EST MIS EN OEUVRE**

VERFAHREN ZUR ANZEIGE DER UMGEBUNG EINES KRAFTFAHRZEUGS AUF EINEM BILDSCHIRM UND KRAFTFAHRZEUG, IN DEM SOLCH EIN VERFAHREN IMPLEMENTIERT IST

METHOD FOR DISPLAYING THE SURROUNDINGS OF A MOTOR VEHICLE ON A SCREEN, AND MOTOR VEHICLE IN WHICH SUCH A METHOD IS IMPLEMENTED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2017 FR 1758581**

(43) Date de publication de la demande:
**22.07.2020 Bulletin 2020/30**

(73) Titulaire: **Renault s.a.s**
**92100 Boulogne Billancourt (FR)**

(72) Inventeur: **AMBROISE-DEVAUX, Stephanie**
**78140 Velizy Villacoublay (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 2 437 494        EP-A1- 2 792 553**
**EP-A2- 3 009 302        WO-A1-2017/154833**
**JP-A- 2010 103 810**

**Description**

DOMAINE TECHNIQUE AUQUEL SE RAPPORTE L'INVENTION

La présente invention concerne de manière générale un procédé d'affichage d'un environnement d'un véhicule automobile sur un écran d'affichage situé dans ce véhicule automobile, et un véhicule automobile dans lequel un tel procédé est mis en oeuvre.

Elle concerne plus particulièrement un tel procédé d'affichage, mis en oeuvre au moyen d'une première caméra et d'une deuxième caméra du véhicule automobile, dont les champs de vision respectifs se recouvrent au moins partiellement.

Elle s'applique de manière particulièrement intéressante à l'aide à la conduite du véhicule automobile, notamment lors de manoeuvres dans une zone de stationnement.

ARRIERE-PLAN TECHNOLOGIQUE

Il est connu, par exemple du document EP 2620917, de générer une vue d'un environnement d'un véhicule automobile en fusionnant quatre images capturées respectivement par quatre caméras très grand angle équipant le véhicule automobile, à savoir une caméra avant, deux caméras latérales, et une caméra arrière. Cette vue est générée en adoptant un point de vue donné par rapport au véhicule automobile.

Lorsqu'un obstacle est situé en avant du véhicule automobile, avec une probabilité de collision élevée avec celui-ci, le point de vue adopté correspond à une vue de dessus du véhicule et de son environnement, centrée sur l'avant du véhicule.

En l'absence de risque de collision, le point de vue adopté correspond à une vue depuis l'arrière du véhicule, cette vue s'étendant en avant du véhicule, jusqu'à une grande distance de ce dernier.

L'inconvénient de ce système est que la qualité de la vue générée est variable en fonction du point de vue adopté. Le document EP 3 009 302 A2 (LG ELECTRONICS INC [KR]) 20 avril 2016 (2016-04-20 et le document JP 2010 103810 A (RICOH KK) 6 mai 2010 (2010-05-06) divulguent à l'avant d'un véhicule une caméra orientée vers le sol et une caméra sensiblement orientée vers l'horizontal.

OBJET DE L'INVENTION

Les modes de réalisation sont exposés dans le jeu de revendications annexé.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- les figures 1 et 2 représentent schématiquement un véhicule automobile dans lequel est mis en oeuvre un procédé d'affichage selon l'invention, vu respectivement de dessus et de côté,
- la figure 3 représente schématiquement les principales étapes du procédé d'affichage mis en oeuvre dans le véhicule de la figure 1,
- la figure 4 représente schématiquement la manière dont le point d'une l'image est projeté sur une surface tridimensionnelle entourant une partie au moins du véhicule automobile,
- la figure 5 représente schématiquement comment le point de la surface tridimensionnelle, obtenu par la projection de la figure 4, est ensuite projeté sur un plan virtuel associé à un point de vue donné,
- la figure 6 représente schématiquement des images capturées par une première et une deuxième caméras avant du véhicule de la figure 1, et par des caméras latérales et arrière de ce véhicule,
- la figure 7 représente schématiquement une image affichée, générée à partir d'une partie des images capturées représentées sur la figure 6, et
- la figure 8 représente schématiquement une autre image affichée, générée à partir d'une partie des images capturées représentées sur la figure 6.

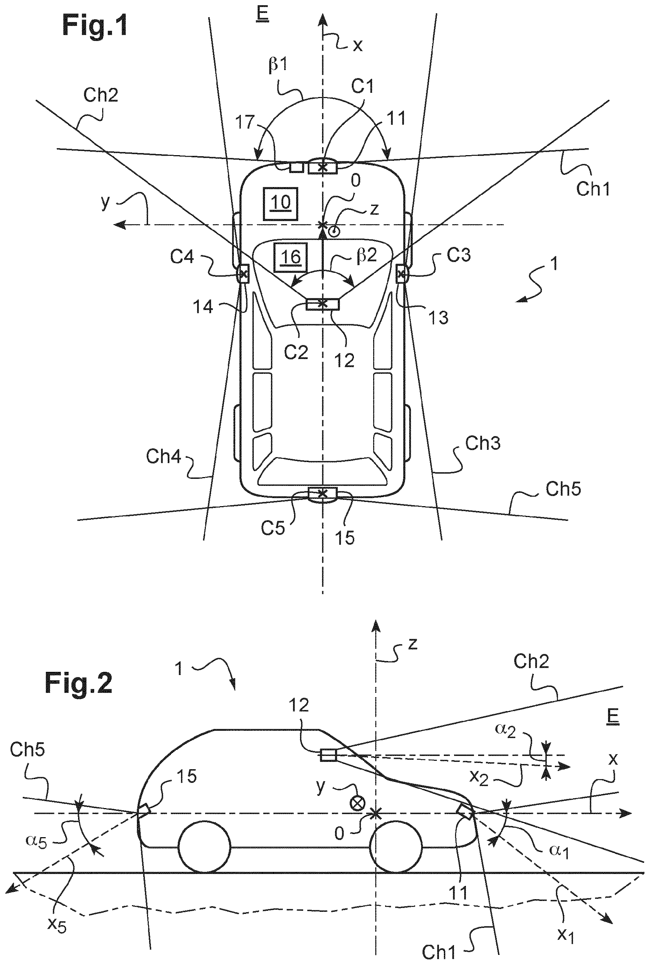

Le véhicule 1 automobile représenté sur les figures 1 et 2 est équipé d'un écran 16 d'affichage et de plusieurs caméras 11, 12, 13, 14, 15 permettant de visualiser différentes zones d'un environnement E extérieur du véhicule.

Ce véhicule 1 comprend également une unité de traitement 10 électronique connectée aux caméras 11, 12, 13, 14, 15 du véhicule et adaptée à traiter des images capturées par ces caméras pour générer une image à afficher sur l'écran 16.

Ici, l'unité de traitement 10 électronique est plus précisément programmée pour combiner, en une seule image à afficher, différentes images capturées respectivement par plusieurs desdites caméras. Un utilisateur du véhicule peut ainsi visualiser simultanément sur le même écran 16 des données issues de ces différentes caméras.

Tel que représenté sur les figures 1 et 2, le véhicule 1 comprend :

- une première caméra 11 et une deuxième caméra 12 dont les champs de vision respectifs Ch1 et Ch2 s'étendent vers l'avant du véhicule 1,
- une troisième caméra 13 et une quatrième caméra 14 latérales, dont les champs de vision respectifs Ch3 et Ch4 s'étendent respectivement du côté droit et du côté gauche du véhicule, et
- un cinquième caméra 15, dont le champ de vision Ch5 s'étend vers l'arrière du véhicule.

Les champs de vision Ch1 et Ch2 respectifs des première et deuxième caméras 11 et 12 couvrent ainsi des zones de l'environnement E du véhicule situées d'un même côté du véhicule 1, ici à l'avant du véhicule.

Toutefois, le champ de vision Ch1 de la première caméra 11 couvre une première zone de cet environnement E plus proche du véhicule 1 qu'une deuxième zone de cet environnement, couverte par le champ de vision Ch2 de la deuxième caméra 12.

Plus précisément, la première caméra 11 est adaptée, de par son orientation, sa position, et l'étendue de son champ de vision, à visualiser le voisinage immédiat de l'avant du véhicule 1, tandis que la deuxième caméra est adaptée plus particulièrement à visualiser l'environnement E du véhicule 1 jusqu'à une grande distance en avant de ce dernier.

La première caméra 11 est ici une caméra à très grand angle de vision, supérieur à 160 degrés dans au moins une direction, disposée à une extrémité avant du véhicule, par exemple sur la face avant du véhicule. Grâce à cette disposition, même des obstacles de faible hauteur, tels que des rebords de trottoir, peuvent être visualisés au moyen de cette caméra. La très grande ouverture du champ de vision Ch1 de cette caméra permet par ailleurs de visualiser de tels obstacles sur toute la largeur du véhicule 1, même si ces obstacles sont très proches de celui-ci.

D'autre part, le champ de vision Ch1 de la première caméra 11 est centré sur une première direction d'observation x1 qui est inclinée vers le sol. Or, la résolution d'une image capturée par une caméra est meilleure pour des points situés au voisinage de l'axe de son champ de vision. L'orientation vers le sol de la première caméra 11 permet donc d'optimiser la résolution des images capturées par cette caméra 11 pour des éléments de l'environnement E situés au voisinage immédiat de l'avant véhicule 1.

Quant à la deuxième caméra 12, il s'agit ici d'une caméra grand angle, orientée de sorte que son champ de vision Ch2 soit centré sur une deuxième direction d'observation x2 sensiblement horizontale.

Le champ de vision Ch2 de la deuxième caméra 12 présente une l'ouverture angulaire totale $\beta 2$ inférieure à celle, $\beta 1$, du champ de vision Ch1 de la première caméra 11. Ici, l'ouverture angulaire totale $\beta 2$ du deuxième champ de vision Ch2 est plus précisément comprise entre 60 et 120 degrés alors que celle du champ de vision Ch1 de la première caméra 11 est supérieure à 160 degrés, voire supérieure à 180 degrés.

Le champ de vision de la deuxième caméra Ch2 est donc non seulement centrée sur une zone de l'environnement E du véhicule 1 éloignée de ce dernier, mais aussi plus concentré sur cette dernière zone que ne l'est le champ de vision de la première caméra 11. Pour des éléments de cet environnement éloignés du véhicule 1, par exemple situés à une dizaine de mètres de celui-ci, la résolution d'une image capturée par la deuxième caméra 12 est donc meilleure que celle d'une image capturée par la première caméra.

D'autre part, dans le mode de réalisation décrit ici, la deuxième caméra 12 est disposée dans un habitacle du véhicule, derrière le pare-brise et à proximité du toit du véhicule, par exemple sous un rétroviseur intérieur du véhicule 1. Ainsi, une image capturée par cette caméra rend compte du positionnement du véhicule dans son environnement d'une manière facilement appréhendable par l'utilisateur du véhicule, puisque le point de vue de cette caméra est comparable au point de vue adopté par cet utilisateur.

L'orientation des première et deuxième caméras, et des autres caméras du véhicule 1, est décrite maintenant plus en détail.

Pour cela, un repère R, lié au véhicule 1 automobile, est introduit. Ce repère R comprend :

- un axe x, longitudinal, qui s'étend parallèlement à un plancher du véhicule de l'arrière vers l'avant du véhicule 1,
- un axe y, qui s'étend transversalement par rapport au véhicule, parallèlement aux essieux, depuis le côté droit vers le côté gauche du véhicule, et
- un axe z perpendiculaire au châssis du véhicule, dirigé du plancher vers le toit du véhicule1.

Les trois axes x, y et z sont orthogonaux deux à deux et forment un repère direct. L'origine O de ce repère est située à proximité de l'essieu avant, à égale distance des côtés gauche et droit du véhicule.

La première direction d'observation x1, associée à la première caméra 11, est contenue ici dans le plan (x,z) et forme avec l'axe x un premier angle de plongée $\alpha_1$ supérieur à 20 degrés, ici égal à 45 degrés (figure 2).

La deuxième direction d'observation x2, associée à la deuxième caméra 12, s'étend ici sensiblement parallèlement à l'axe x, c'est-à-dire qu'elle forme avec l'axe x un deuxième angle de plongée $\alpha_2$ compris entre +20 degrés et -20 degrés. Lorsque le véhicule est situé sur une voie de circulation horizontale, la deuxième direction d'observation x2 est donc sensiblement horizontale elle aussi.

Quant aux troisième, quatrième et cinquième caméras 13, 14 et 15, elles sont ici inclinées vers le sol de manière comparable à la première caméra 11.

Plus précisément, les champs de vision Ch3, Ch4 et Ch5 des troisième, quatrième et cinquième caméras 13, 14 et 15 sont centrés respectivement sur une troisième, une quatrième et une cinquième directions d'observation x3, x4 et x5 formant chacune, avec le plan (x,y) du véhicule (plan du plancher du véhicule), un angle de plongée supérieur à 20 degrés, ici égal à 45 degrés (en valeur absolue).

Les troisième et quatrième directions d'observation x3 et x4 sont contenues chacun dans le plan (y,z) transverse du véhicule. Le troisième angle de plongé $\alpha_3$ est défini entre l'axe -y et la troisième direction d'observation x3. Le quatrième angle de plongé $\alpha_4$ est défini entre l'axe y et la quatrième d'observation x4.

La cinquième direction d'observation x5 est contenue, comme la première, dans le plan (x,z). Le cinquième angle de plongé $\alpha_5$ est défini entre l'axe -x et la cinquième direction d'observation x5.

Les troisième, quatrième et cinquième caméras 13, 14 et 15 sont, comme la première caméra, des caméras à très angle de vision (dite aussi caméra « fish-eye » en anglais). Ainsi, les champs visions respectifs de ces caméras présentent chacun, dans le plan (x,y), une ouverture angulaire totale supérieure à 160 degrés, voire même, comme ici, supérieure à 180 degrés.

Les troisième et quatrième caméras 13 et 14 sont disposées par exemple sur les portières avant ou arrière, sous les rétroviseurs extérieurs, ou encore sur les ailes du véhicule automobile. La cinquième caméra 15 est disposée par exemple sur une porte de coffre du véhicule.

Pour chacune des caméras mentionnées ci-dessus, la direction d'observation x1, x2, x3, x4, x5 de la caméra et la position de son centre optique $C_1$, $C_2$, $C_3$, $C_4$, $C_5$ dans le repère R du véhicule sont connues par construction.

En plus de ces caméras, le véhicule 1 comprend ici un détecteur d'obstacle 17, distinct de ces dernières, adapté à détecter la présence d'un obstacle dans le champ de vision Ch1 de la première caméra 11, c'est-à-dire adapté à détecter un élément s'élevant, dans ce champ de vision, au-dessus du sol.

Un tel obstacle peut correspondre notamment à un piéton, à un autre véhicule automobile, à un rebord de trottoir, un poteau, un arbre, un parapet ou encore un mur.

Le détecteur d'obstacle 17 peut par exemple être réalisé au moyen de capteurs à ultrasons, ou au moyen d'un radar ou d'un lidar (selon l'acronyme anglo-saxon de « Laser Détection and Ranging », c'est-à-dire détection et localisation par laser). Le champ de détection du détecteur d'obstacle 17, et le champ de vision Ch1 de la première caméra 11 se recouvrent au moins en partie.

Le détecteur d'obstacle 17 est connecté à l'unité de traitement 10 et est adapté à lui transmettre un signal représentatif de la présence, ou de l'absence d'un obstacle dans le champ de vision de la première caméra 11. De préférence, ce signal est également représentatif d'une distance séparant l'obstacle du véhicule.

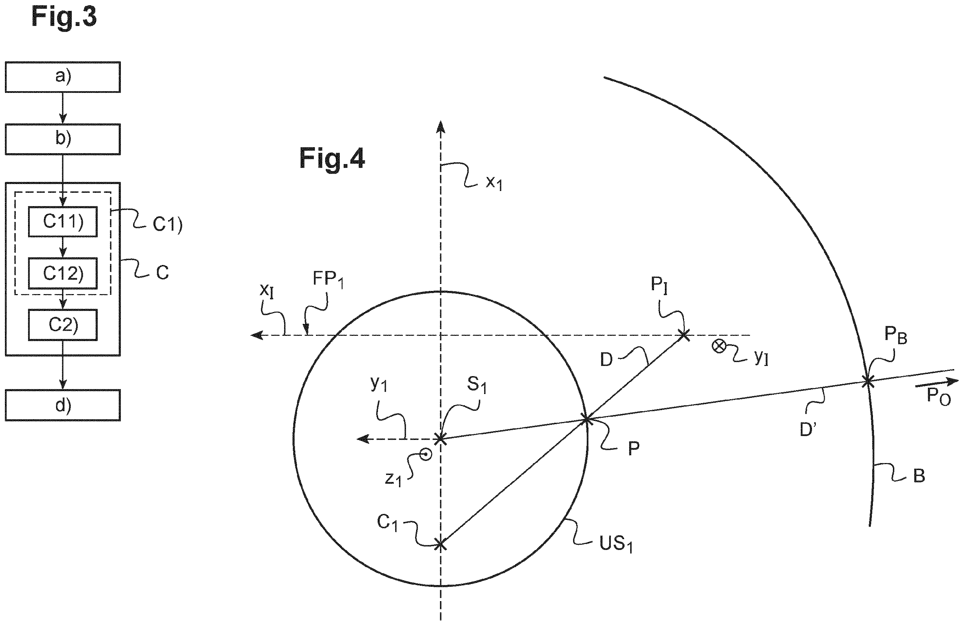

De manière remarquable, l'unité de traitement 10 est programmée pour exécuter les étapes suivantes du procédé d'affichage de la figure 3 :

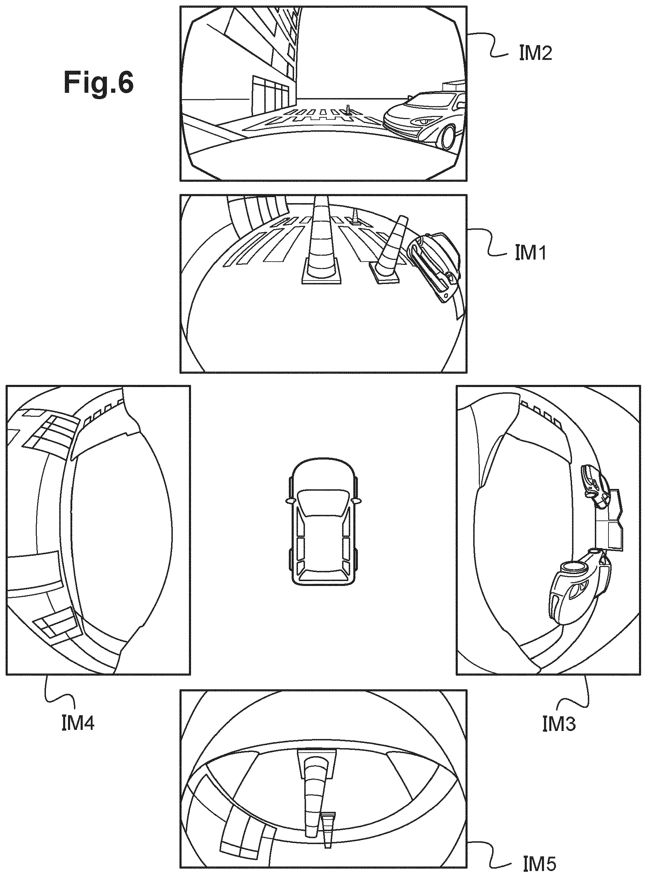

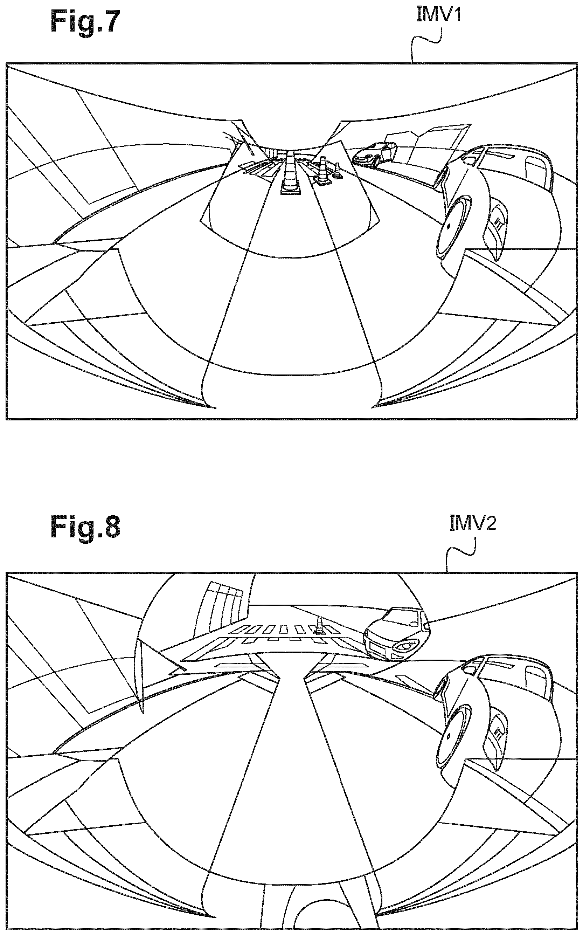

a) déterminer si un obstacle est présent ou non dans le champ de vision Ch1 de la première caméra 11,

b) en présence d'un obstacle dans le champ de vision Ch1 de la première caméra 11, sélectionner la première caméra 11, et, en l'absence d'obstacle dans le champ de vision Ch1 de la première caméra 11, sélectionner la deuxième caméra 12,

c) générer une image IMV1, IMV2 à afficher (voir figures 7 et 8), en fonction d'une image IM1, IM2 capturée par la caméra 11, 12 sélectionnée à l'étape b) (voir figure 6), et

d) afficher l'image IMV1, IMV2 générée à l'étape c) sur l'écran 16 du véhicule 1.

L'image IMV1, IMV2 est générée soit sur la base de l'image IM1 capturée par la première caméra 11, soit sur la base de l'image IM2 capturée par la deuxième caméra 12.

Si l'image IMV1, IMV2 est générée sur la base de l'image IM1 capturée par la première caméra 11, l'image IM2 capturée par la deuxième caméra 12 n'apparait pas dans l'image générée IMV1, IMV2.

Si l'image IMV1, IMV2 est générée sur la base de l'image IM2 capturée par la deuxième caméra 12, l'image IM1 capturée par la première caméra 11 n'apparait pas dans l'image générée IMV1, IMV2.

Recourir ainsi à deux caméras distinctes, la première étant employée en cas de détection d'un obstacle et la deuxième étant employée sinon, permet, comme cela a été expliqué en détail plus haut, d'optimiser les caractéristiques de ces deux caméras indépendamment l'une de l'autre et ainsi de bénéficier d'une qualité de visualisation optimale et constante, même lorsque le point de vue sélectionné pour l'image affichée IMV1, IMV2 change, passant d'une vue centrée sur le voisinage immédiat du véhicule (cas d'une détection d'obstacle), à une vue d'ensemble de l'environnement du véhicule s'étendant à grande distance en avant de ce dernier.

Dans le mode de réalisation décrit ici, à l'étape a), l'unité de commande 10 détermine si un obstacle est présent ou non dans le champ de vision Ch1 de la première caméra 11 au moyen du détecteur d'obstacle 17 mentionné précédemment. En variante, l'unité de traitement pourrait toutefois détecter la présence d'un tel obstacle par traitement d'une image capturée par la première caméra.

Ici, à l'étape b), l'unité de traitement 10 sélectionne la première caméra à condition en outre qu'une distance entre cet obstacle et l'avant du véhicule soit inférieure à un seuil donné, égal par exemple à 3 mètres et pouvant varier en fonction de la vitesse du véhicule 1. Sinon, l'unité de traitement 10 sélectionne la deuxième caméra.

D'autre part, à l'étape c), il est prévu ici de générer l'image à afficher en fusionnant, c'est-à-dire en combinant :

- l'image capturée par ladite caméra sélectionnée à l'étape b), avec
- trois images capturées respectivement par les troisième, quatrième et cinquième caméras 13, 14 et 15,

de manière que l'image à afficher comporte une partie au moins de l'image capturée par la caméra sélectionnée, et une partie au moins de chacune de ces trois images.

Deux exemples d'images IMV1 et IMV2 générées ainsi sont représentées schématiquement sur les figures 7 et 8.

L'image IMV1 correspond à une situation dans laquelle le véhicule 1 stationne sur un parking, deux cônes de signalisation routière étant situés à moins d'un mètre devant lui. Dans cette situation, des obstacles, en l'occurrence ces cônes de signalisation routière, sont présents dans le champ de vision Ch1 de la première caméra 11, à proximité du véhicule 1. L'image IMV1 affichée est donc générée à partir des images IM1, IM3, IM4 et IM5 capturées, dans cette même situation, respectivement par les première, troisième, quatrième et cinquième caméras 11, 13, 14 et 15. Ces images sont représentées schématiquement et de façon distincte sur la figure 6.

L'image IMV2 correspond à une autre situation, dans laquelle le véhicule 1 stationne sur le même parking que précédemment, en l'occurrence au même endroit, les deux cônes de signalisation routière mentionnés précédemment étant toutefois absents. Dans cette autre situation, aucun obstacle n'est présent dans le champ de la première caméra 11, à proximité du véhicule. L'image IMV2 affichée est donc générée à partir des images IM2, IM3, IM4 et IM5 capturées, dans cette autre situation, respectivement par les deuxième, troisième, quatrième et cinquième caméras 12, 13, 14 et 15. Ces images sont également représentées schématiquement et de façon distincte sur la figure 6 (les images IM3, IM4 et IM5 capturées par les troisième, quatrième et cinquième caméras sont identiques dans les deux situations considérées ci-dessus, et elles ne sont donc représentées qu'une fois).

L'opération de fusion des images capturées, qui permet d'obtenir l'image à afficher, est maintenant décrite plus en détail en référence aux figures 3 à 5.

Cette fusion est réalisée ici au cours des sous-étapes suivantes de l'étape c) (figure 3) :

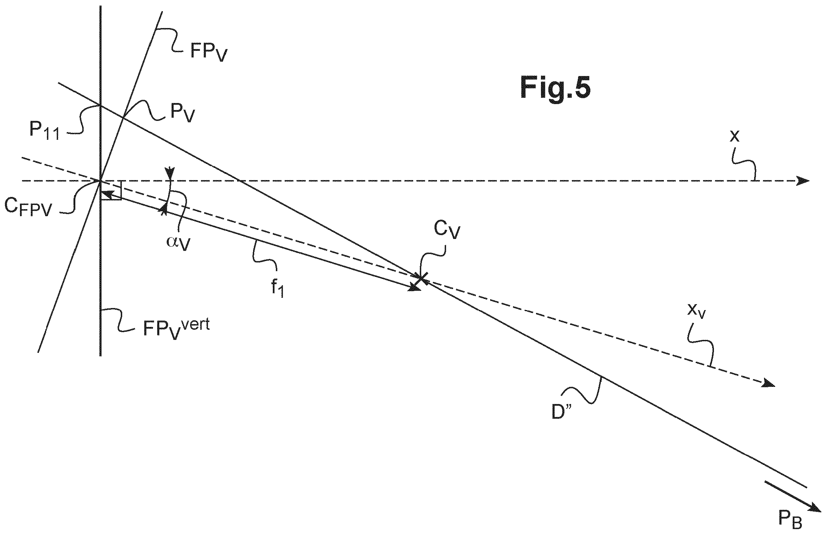

c1) projeter une partie au moins de chacune des images à fusionner sur une surface tridimensionnelle B concave entourant au moins en partie le véhicule 1 automobile (figure 4), de façon à obtenir une image tridimensionnelle, et
c2) projeter ladite image tridimensionnelle sur un plan virtuel FPv, (figure 5) pour obtenir l'image IMV1, IMV2 à afficher.

La surface tridimensionnelle B entoure ici les cinq caméras 11 à 15 du véhicule 1. Cette surface, parfois appelé « bol » dans la littérature spécialisée (ou « bowl », en anglais), correspond ici à une portion de sphère de rayon Ra compris par exemple entre 3,5 mètres et 5 mètres. Cette sphère est centrée sur un point $C_B$, de coordonnées $X_{CB}$, $Y_{CB}$ et $Z_{CB}$ dans le repère R du véhicule 1. Le point $C_B$ est par exemple situé au centre du véhicule, c'est-à-dire à égale distance des extrémités avant et arrière du véhicule, et à égale distance des flancs gauche et droit de celui-ci.

En variante, cette surface tridimensionnelle pourrait présenter une forme différente d'une sphère, par exemple une forme d'ellipsoïde.

Quant au plan virtuel FPv, il correspond plus précisément au plan focal d'une caméra virtuelle, présentant une orientation et une distance focale f1 données. L'image à afficher, projetée sur le plan virtuel FPv, correspond à une image de l'environnement du véhicule telle qu'elle aurait été capturée par cette caméra virtuelle.

L'image à afficher correspond ainsi à un point de vue donné, depuis lequel est observé cet environnement E, ce point de vue pouvant aisément être modifié en changeant les caractéristiques de la caméra virtuelle, par exemple son orientation.

Le détail des calculs effectués par l'unité de traitement 10 au cours des étapes c1) et c2) peut maintenant être présenté.

Sous-étape c1)

Dans le mode de réalisation décrit ici, chaque image à fusionner est projetée sur la surface tridimensionnelle B par l'intermédiaire d'une sphère caractéristique $US_k$ associée à la caméra ayant capturée cette image.

Dans la suite des calculs, on utilisera un indice entier k qui varie de 1 à 5, selon que la caméra considérée est la première, deuxième, troisième, quatrième ou cinquième.

Ces sphères caractéristiques sont présentées dans un premier temps, la projection sur la surface tridimensionnelle B étant présentée ensuite.

La sphère caractéristique $US_k$ est déterminée préalablement au procédé décrit ici, par calibration, si bien que la position de son centre $S_k$ est connue. Les caractéristiques de cette sphère peuvent aussi être connues par fabrication, et être fournies par le constructeur de la caméra.

Cette sphère caractéristique $US_k$ est telle que la capture d'une image quelconque par ladite caméra soit optiquement équivalente, pour chaque point-objet $P_O$ de l'espace à :

- une projection dudit point-objet Po sur ladite sphère $US_k$, pour obtenir un point-ojet projeté (ci-après appelé point P) situé sur cette sphère, puis à
- une projection du point P obtenu précédemment, sur un plan focal $FP_k$ de ladite caméra, pour obtenir un point-image $P_I$ de l'image $IM_k$ capturée.

Ces deux projections, équivalentes d'un point de vue optique à la capture de l'image $IM_k$ par la caméra considérée, sont illustrées sur la figure 4 dans le cas de la première caméra (l'indice k est dans ce cas égal à 1).

Comme on peut le voir sur cette figure, le point P obtenu en projetant le point-objet Po sur la sphère caractéristique $US_1$, est situé à l'intersection entre :

- une droite D', passant par le centre $S_1$ de la sphère $US_1$ et par le point-objet $P_O$, et
- la sphère caractéristique $US_1$ elle-même.

Le point $P_I$ de l'image capturée est situé quant à lui à l'intersection entre :

- une droite D, passant le centre optique $C_1$ de la première caméra 11 et par le point P obtenu précédemment, et
- le plan focal $FP_1$ de la première caméra.

La première direction d'observation x1, sur laquelle est centré le champ de vision Ch1 de la première caméra, est perpendiculaire au plan focal $FP_1$, et passe par le centre optique $C_1$.

Le centre $S_1$ de la sphère caractéristique associée à cette caméra est également situé sur l'axe x1, à une distance cam_sph du centre optique $C_1$. La distance cam_sph est connue (elle est déterminée par exemple au cours de la calibration de la caméra mentionnée ci-dessus).

Des constructions géométriques similaires sont employées pour définir les sphères caractéristiques associées aux autres caméras du véhicule.

Pour ce qui est maintenant de la projection sur la surface tridimensionnelle B, elle est réalisée ici au moyen des opérations suivantes de la sous-étape c1) :

c11) projeter chaque point-image $P_I$ de l'image $IM_k$ à fusionner sur la sphère caractéristique $US_k$ associée à la caméra ayant capturé cette image, pour obtenir un point P situé sur cette sphère, puis

c12) projeter le point P obtenu précédemment sur ladite surface tridimensionnelle B, pour obtenir une point $P_B$ situé sur cette surface.

Le point $P_B$ est ensuite projeté sur plan virtuel $FP_V$ qui a été mentionné plus haut.

Opération c11)

La projection réalisée au cours de l'opération c11), qui permet d'obtenir le point P à partir du point-image $P_I$, correspond à l'inverse de la projection du point P sur le plan focal $FP_k$ qui a été décrite plus haut.

Plus précisément, lors de l'opération c11), des coordonnées $X_1$, $Y_1$ et $Z_1$, repérant le point P dans un repère RS associé à la sphère $US_k$, sont déterminés en fonction des indices i et j repérant un pixel donné de l'image $IM_k$ à fusionner.

Les indices i et j correspondent respectivement aux numéros de colonne et de ligne du pixel considéré. L'indice i est compris entre 1 et $Res_h$, où $Res_h$ est par exemple égal à 1280. L'indice j est compris entre 1 et $Res_v$, où $Res_v$ est

par exemple égal à 800.

Un quelconque point-image $P_I$ de l'image $IM_k$ capturée est situé, dans le plan focal $FP_k$ de la caméra ayant capturé cette image, à une position de coordonnées $X_I$ et $Y_I$, où

$$\begin{cases} X_I = \left(\dfrac{Resh}{2} - i\right) * \dfrac{C_X}{Res_h} \\ Y_I = \left(\dfrac{Resv}{2} - j\right) * \dfrac{C_Y}{Res_v} \end{cases}$$

$C_X$ et $C_Y$ correspondant respectivement à la largeur et à la hauteur du capteur de la caméra considérée.

Les coordonnées $X_I$ et $Y_I$ sont exprimées dans un repère $R_I$ dont les axes $x_I$ et $y_I$ sont parallèles respectivement au grand côté et au petit côté du capteur de la caméra considérée.

L'origine du repère RS, dans lequel sont calculées les coordonnées $X_1$, $Y_1$ et $Z_1$ repérant le point P, a pour origine le centre $S_k$ de la sphère caractéristique $US_k$ considérée. Il comprend trois axes $x_k$, $y_k$ et $z_k$ orthogonaux deux à deux, l'axe $x_k$ coïncidant la direction d'observation $x_k$ de la caméra.

Les coordonnées $X_1$, $Y_1$ et $Z_1$ sont alors déterminées conformément à la formule suivante :

$$\begin{cases} X_1 = \eta - cam\_sph \\ Y_1 = \eta \cdot X_I \\ Z_1 = -\eta \cdot Y_I \end{cases}$$

où

$$\eta = \frac{cam\_sph + \sqrt{1 + \left(X_I{}^2 + Y_I{}^2\right) * \left(1 - cam\_sph^2\right)}}{X_I{}^2 + Y_I{}^2 + 1} \quad .$$

Dans le mode de réalisation décrit ici, pour chaque pixel de l'image $IM_k$, un point P correspondant, situé sur la sphère caractéristique $US_k$, est déterminé.

Après avoir déterminé les coordonnées $X_1$, $Y_1$ et $Z_1$ du point P dans le repère RS associé à la sphère caractéristique $US_k$, ses coordonnées $Xundis_{sp}$, $Yundis_{sp}$ et $Zundis_{sp}$ dans le repère R du véhicule 1 sont déterminées au moyen des formules de changement de repère ci-dessous.

Pour les première et deuxième caméras 11 et 12 :

$$\begin{cases} Xundis_{sp} = X_1 * \cos(\alpha_k) + Z_1 * \sin(\alpha_k) + X_s \\ Yundis_{sp} = Y_1 + Y_s \\ Zundis_{sp} = -X_1 * \sin(\alpha_k) + Z_1 * \cos(\alpha_k) + Z_s \end{cases}$$

où l'angle $\alpha_k$ est respectivement égal aux angles de plongée $\alpha_1$ et $\alpha_2$. Pour les troisième et quatrième caméras 13 et 14 :

$$\begin{cases} Xundis_{sp} = -Y_1 + X_s \\ Yundis_{sp} = -X_1 * \cos(\alpha_k) + Z_1 * \sin(\alpha_k) + Y_s \\ Zundis_{sp} = X_1 * \sin(\alpha_k) + Z_1 * \cos(\alpha_k) + Z_s \end{cases}$$

où l'angle $\alpha_k$ est respectivement égal aux angles de plongée $\alpha_3$ et $\alpha_4$.

Et pour la cinquième caméra 15 :

$$\begin{cases} \text{Xundis}_{sp} = -X_1 * \cos(\alpha_5) - Z_1 * \sin(\alpha_5) + X_s \\ \text{Yundis}_{sp} = -Y_1 + Y_s \\ \text{Zundis}_{sp} = X_1 * \sin(\alpha_5) - Z_1 * \cos(\alpha_5) + Z_s \end{cases}$$

Les coordonnées $X_S$, $Y_S$ et $Z_S$ sont les coordonnées du centre $S_k$ de la sphère caractéristique $US_k$ de la caméra considérée, dans le repère R du véhicule 1.

Ces coordonnées sont par exemple déterminées en fonction de la position du centre $C_k$ de cette caméra, de la distance cam_sph entre $C_k$ et $S_k$, et en fonction de l'angle de plongé $\alpha_k$ de la caméra (chacune de ces données est connue, comme cela a déjà été indiqué).

Opération c12)

L'opération c12) de projection depuis la sphère caractéristique $US_k$, sur la surface tridimensionnelle B, peut maintenant être décrite.

Au cours de cette opération, pour chaque point P projeté précédemment sur la sphère caractéristique $US_k$, un point correspondant $P_B$ situé sur la surface tridimensionnelle B est déterminé.

Comme cela est illustré schématiquement sur la figure 4 pour la sphère caractéristique de la première caméra 11, le point $P_B$ est déterminé de manière à se situer à l'intersection entre :

- la droite D' (qui passe par le point P et le centre $S_k$ de la sphère) et
- la surface tridimensionnelle B.

Déterminer ainsi chaque point $P_B$ permet d'obtenir, sur la surface tridimensionnelle B, une image tridimensionnelle extrêmement réaliste, dont la vision par l'une des caméras du véhicule, ou par la caméra virtuelle précitée, est particulièrement proche d'une image de l'environnement E du véhicule que cette caméra aurait capturée en réalité.

En effet, compte tenu de la manière dont est obtenu chaque point $P_B$, dans la situation virtuelle pour laquelle le véhicule 1 serait entouré seulement de la surface tridimensionnelle B, sur laquelle se déploie l'image tridimensionnelle, chaque caméra du véhicule capturerait une image identique à l'image $IM_k$ capturée en réalité.

Compte tenu du fait que la surface tridimensionnelle est ici une sphère de rayon Ra et de centre $C_B$, les coordonnées $X_B$, $Y_B$ et $Z_B$ du point $P_B$ dans le repère R du véhicule 1 sont déterminées au moyen des formules ci-dessous.

Tout d'abord, les variables intermédiaires de calcul suivantes sont introduites :

$$x_{10} = \text{Xundis}_{sp} - X_{CB}$$

$$y_{10} = \text{Yundis}_{sp} - Y_{CB}$$

$$z_{10} = \text{Zundis}_{sp} - Z_{CB}$$

$$a_1 = (X_s - \text{Xundis}_{sp})^2 + (Y_s - \text{Yundis}_{sp})^2 + (Z_s - \text{Zundis}_{sp})^2$$

$$b_1 = 2 * x_{10} * (X_s - \text{Xundis}_{sp})$$
$$+ 2 * y_{10} * (Y_s - \text{Yundis}_{sp}) + 2 * z_{10} * (Z_s - \text{Zundis}_{sp})$$

$$c_1 = x_{10}{}^2 + y_{10}{}^2 + z_{10}{}^2 - Ra^2$$

$$\text{rac}_{delta} = \sqrt{b_1^2 - 4 \cdot a_1 \cdot c_1}$$

Une variable t est également introduite. Dans le cas des première, deuxième, troisième et quatrième caméras 11 à 14, cette variable est déterminée au moyen de la formule suivante :

$$t = \frac{-b_1 + rac_{delta}}{2 * a1}$$

Dans le cas de la cinquième caméra 15, la variable t est déterminée au moyen de la formule suivante :

$$t = \frac{-b_1 - rac_{delta}}{2 * a1}$$

Les coordonnées $X_B$, $Y_B$ et $Z_B$ du point $P_B$ sont alors obtenues au moyen des formules ci-dessous :

$$X_B = Xundis_{sp} + (X_s - Xundis_{sp}) * t$$

$$Y_B = Yundis_{sp} + (Y_s - Yundis_{sp}) * t$$

$$Z_B = Zundis_{sp} + (Z_s - Zundis_{sp}) * t$$

Les calculs ci-dessus sont basés sur le fait que les points $S_k$, P et $P_B$ sont alignés, et sur le fait que la distance entre le point $C_B$ et le point $P_B$ est égale à Ra. Ces calculs pourraient bien sûr être adaptés à une surface tridimensionnelle différente d'une sphère de rayon Ra.

Sous-étape c2)

L'image IMV1, IMV2 à afficher sur l'écran 16 correspond ici à une image (virtuelle) qui aurait été capturée par la caméra virtuelle précitée, cette caméra virtuelle visualisant l'image tridimensionnelle déployée sur la surface tridimensionnelle B.

Les coordonnées du centre optique Cv de la caméra virtuelle dans le repère R du véhicule sont notées Xv, Yv et Zv. La direction d'observation xv de cette caméra définit avec l'axe x du véhicule un angle de plongé av. Par ailleurs, comme déjà indiqué, cette caméra virtuelle présente une distance focale f1. Le plan virtuel FPv, qui correspond au plan focal de cette caméra, s'étend donc perpendiculairement à l'axe xv, à une distance f1 du centre optique Cv. L'axe xv croise le plan virtuel FPv en un point $C_{FPV}$ appelé centre focal (figure 5).

L'image à afficher est déterminée en projetant chaque point $P_B$ obtenu précédemment, sur le plan virtuel FPv, pour obtenir un point-image Pv correspondant. Le point-image Pv constitue l'un des points de l'image IMV1, IMV2 à afficher.

Comme cela est illustré schématiquement sur la figure 5, le point Pv est déterminé de manière à se situer à l'intersection entre :

- une droite D", qui passe par le point $P_B$ et par le centre optique Cv de la caméra virtuelle, et
- le plan focal FPv de cette caméra.

Pour déterminer les coordonnées du point Pv dans le plan focal FPv, les coordonnées d'un point intermédiaire $P_{11}$ sont déterminées tout d'abord.

Le point $P_{11}$ est situé à l'intersection entre la droite D" et un plan focal « vertical » $FP_V^{vert}$. Le plan focal vertical $FP_V^{vert}$ est orthogonal à l'axe x, longitudinal, du véhicule, et passe par le centre focal $C_{FPV}$.

Les coordonnées $X_{11}$, $Y_{11}$ et $Z_{11}$ du point intermédiaire $P_{11}$, dans le repère R du véhicule, sont déterminées au moyen des formules ci-dessous :

$$X_{11} = X_V + f1 * \cos(\alpha_V)$$

$$Y_{11} = (Y_B - Y_V) * \frac{X_{11} - X_V}{X_B - X_V} + Y_V$$

$$Z_{11} = (Z_B - Z_V) * \frac{X_{11} - X_V}{X_B - X_V} + Z_V$$

Par ailleurs, les coordonnées $X_{CFP}$, $Y_{CFP}$ et $Z_{CFP}$ du centre focal $C_{FPV}$, dans le repère R du véhicule, sont données par :

$$X_{CFP} = X_V + f1 * \cos(\alpha_V)$$

$$Y_{CFP} = Y_V$$

$$Z_{CFP} = Z_V - f1 * \sin(\alpha_V)$$

Les distances :

- $dist_a$, entre le centre optique Cv et le point intermédiaire $P_{11}$
- $dist_c$, entre le centre focal $C_{FPV}$ et le point intermédiaire $P_{11}$, et
- d, entre le centre focal $C_{FPV}$ et le point image Pv, s'expriment donc conformément aux formule suivantes :

$$dist_a = \sqrt{(X_V - X_{11})^2 + (Y_V - Y_{11})^2 + (Z_V - Z_{11})^2}$$

$$dist_c = \sqrt{(X_{11} - X_{CFP})^2 + (Y_{11} - Y_{CFP})^2 + (Z_{11} - Z_{CFP})^2}$$

$$d = f1 * \tan\left[\text{acos}\left(0.5 * \frac{dist_a^2 + f1^2 - dist_c^2}{dist_a * f1}\right)\right]$$

Les variables intermédiaires suivantes sont alors introduites :

$$x_{11} = X_{11} - X_V$$

$$y_{11} = Y_{11} - Y_V$$

$$z_{11} = Z_{11} - Z_V$$

$$h_1 = X_V - X_{CFP}$$

$$h_2 = Y_V - Y_{CFP}$$

$$h_3 = Z_V - Z_{CFP}$$

$$a_2 = x_{11}^2 + y_{11}^2 + z_{11}^2$$

$$b_2 = 2 * (x_{11} * h_1 + y_{11} * h_2 + z_{11} * h_3)$$

$$c_2 = h_1^2 + h_2^2 + h_3^2 - d^2$$

$$rac_{delta2} = \sqrt{b_2^2 - 4 \cdot a_2 \cdot c_2}$$

$$t_1 = \frac{-b_2 + rac_{delta2}}{2 * a_2}$$

Les coordonnées $X_{PV}$, $Y_{PV}$ et $Z_{PV}$ du point $P_V$ sont alors obtenues au moyen des formules ci-dessous :

- dans le cas d'un point $P_B$ issu d'une image $IM_k$ capturée par l'une des première, deuxième, troisième ou quatrième caméras 11 à 14 (c'est-à-dire pour k=1 à 4) :

$$X_{PV} = x_{11} * t_1 + X_V$$

$$Y_{PV} = y_{11} * t_1 + Y_V$$

$$Z_{PV} = z_{11} * t_1 + Z_V$$

- et dans le cas d'un point $P_B$ issu d'une image $IM_5$ capturée par la cinquième caméra 15, arrière :

$$X_{PV} = x_{11} * t_1 + X_V$$

$$Y_{PV} = -(y_{11} * t_1 + Y_V)$$

$$Z_{PV} = z_{11} * t_1 + Z_V$$

Les coordonnées $X_{IF}$ et $Y_{IF}$ du point point-image Pv, dans le repère d'axes $x_{IF}$ et $y_{IF}$ associé au capteur de la caméra virtuelle (ce capteur, virtuel, s'étend dans le plan virtuel FPv), sont alors déterminées comme suit :

$$X_{IF} = (Y_{PV} - Y_V)$$

$$Y_{IF} = \frac{-(Z_{PV} - Z_V + f1 * \sin(\alpha_V))}{\cos(\alpha_V)}$$

Les indices $i_{IF}$ et $j_{IF}$ repérant, dans l'image IMV1, IMV2 à afficher, le pixel correspondant au point-image Pv, sont alors donnés par

$$i_{IF} = \left(\frac{Res_h}{2} - X_{IF} * \frac{Res_h}{f_1 * c_x}\right)$$

$$j_{IF} = \left(\frac{Res_v}{2} - Y_{IF} * \frac{Res_v}{f_1 * c_y}\right)$$

Enfin, pour parfaire la fusion entre les différentes images $IM_k$ à combiner, une opération de fondu est appliquée dans les zones de l'image à afficher où plusieurs des images capturées se superposent l'une à l'autre. Ce fondu est par exemple obtenu en calculant, pour chaque pixel d'une telle zone de recouvrement, une moyenne entre

- une valeur de luminosité, associée à un point-image Pv issu de l'une des images capturées $IM_k$, et
- une autre valeur de luminosité, associée à un autre point-image P'v issu d'une autre des images capturées $IM_{k'}$, cet autre point-image étant situé au niveau du même pixel que le point image Pv.

Les deux valeurs de luminosité mentionnées ci-dessus correspondent par exemple aux valeurs de luminosité des point-images $P_l$ et $P_l'$ (des images $IM_k$ et $IM_{k'}$) dont sont respectivement issus les points Pv et P'v.

D'autres techniques de fondu peuvent bien sûr être envisagées. On pourrait prévoir notamment que le fondu soit réalisé directement lors de la projection sur la surface tridimensionnelle B, avant la projection sur le plan virtuel FPv.

Dans le procédé d'affichage qui vient d'être décrit, l'orientation du plan virtuel FPv, ou, autrement formulé, l'orientation de la caméra virtuelle, peut être fixe. Elle peut aussi varier en fonction de différents paramètres, en particulier en fonction de la présence ou de l'absence d'un obstacle dans le champ de vision Ch1 de la première caméra 11.

Il est ainsi prévu, dans le mode de réalisation décrit ici :

- de sélectionner une première orientation du plan virtuel FPv lorsqu'un obstacle est présent dans le champ de vision Ch1 de la première caméra 11 et
- de sélectionner une deuxième orientation dudit plan virtuel en l'absence d'obstacle dans ce champ de vision.

Cette première orientation correspond par exemple à une direction d'observation xv de la caméra virtuelle plus inclinée vers le sol que lorsque la deuxième orientation est sélectionnée.

Grâce à cette disposition, le point de vue adopté pour générer l'image à afficher est adapté au mieux à la situation dans laquelle se trouve le véhicule, c'est-à-dire au fait qu'un obstacle soit présent ou non en avant du véhicule.

De manière optionnelle, on peut prévoir aussi que la position de la caméra virtuelle, ou que la valeur de sa distance focale f1 varie selon qu'un obstacle ait été détecté ou non dans le champ de vision de la première caméra.

Dans le procédé d'affichage décrit ci-dessus, l'image à afficher est générée en fusionnant quatre images capturées respectivement par quatre caméras différentes du véhicule.

En variante, l'image à afficher pourrait toutefois être générée sur la base de l'image capturée par la caméra sélectionnée seulement, en particulier si le véhicule comprend seulement deux caméras, à savoir la première et la deuxième caméra.

En variante encore, l'image à afficher pourrait être générée en fusionnant l'image capturée par la caméra sélectionnée avec deux images capturées respectivement par les troisième et quatrième caméras seulement, l'image capturée par la cinquième caméra, arrière, n'étant pas prise en compte.

**Revendications**

1. Procédé d'affichage d'un environnement (E) d'un véhicule (1) automobile sur un écran (16) d'affichage situé dans le véhicule (1), le véhicule (1) comprenant une première caméra (11) et une deuxième caméra (12) dont les champs de vision respectifs (Ch1, Ch2) se recouvrent au moins partiellement, le champ de vision (Ch1) de la première caméra (11) étant centré sur une première direction d'observation (x1) inclinée vers le sol et le champ de vision (Ch2) de la deuxième caméra (12) étant centré sur une deuxième direction d'observation (x2) sensiblement horizontale, le procédé comprenant les étapes suivantes, mises en oeuvres par une unité de traitement (10) électronique du véhicule automobile :

   a) déterminer si un obstacle est présent ou non dans le champ de vision (Ch1) de la première caméra (11),
   b) en présence d'un obstacle dans le champ de vision (Ch1) de la première caméra (11), sélectionner la première caméra (11), et, en l'absence d'obstacle dans le champ de vision (Ch1) de la première caméra (11), sélectionner la deuxième caméra (12),
   c) générer une image (IMV1, IMV2) à afficher, en fonction d'une image (IM1, IM2) capturée par la caméra (11, 12) sélectionnée à l'étape b), et
   d) afficher l'image (IMV1, IMV2) générée à l'étape c) sur ledit écran (16).

2. Procédé selon la revendication 1, au cours duquel l'image (IMV1, IMV2) est générée à l'étape c) en fusionnant :

   - l'image (IM1, IM2) capturée par la caméra (11, 12) sélectionnée à l'étape b) avec

- une image (IM3, IM4, IM5) capturée par une troisième caméra (13, 14, 15) du véhicule (1), de manière que l'image (IMV1, IMV2) à afficher comporte une partie au moins de l'image (IM1, IM2) capturée par la caméra (11, 12) sélectionnée, et une partie au moins de l'image (IM3, IM4, IM5) capturée par la troisième caméra (13, 14, 15).

3. Procédé selon la revendication 2, au cours duquel il est prévu, pour fusionner lesdites images (IM1, IM2, IM3, IM4, IM5), de :

c1) projeter une partie au moins de l'image (IM1, IM2) capturée par la caméra (11, 12) sélectionnée et une partie au moins de l'image (IM3, IM4, IM5) capturée par la troisième caméra (13) sur une surface tridimensionnelle (B) concave entourant une partie au moins du véhicule (1), de façon à obtenir une image tridimensionnelle, et de
c2) projeter ladite image tridimensionnelle sur un plan virtuel (FPv).

4. Procédé selon la revendication 3, au cours duquel :

une sphère caractéristique ($US_k$) pouvant être définie pour chacune des première, deuxième et troisième caméras (11, 12, 13, 14, 15) de sorte que la capture d'une image quelconque par ladite caméra (11, 12, 13, 14, 15) soit optiquement équivalente, pour chaque point-objet ($P_O$) de l'espace à :

- une projection dudit point-objet ($P_O$) sur ladite sphère caractéristique ($US_k$) de façon à obtenir un point-objet projeté (P), puis à
- une projection, sur un plan focal ($FP_k$) de ladite caméra (11, 12, 13, 14, 15), du point-objet projeté (P) de façon à obtenir un point-image ($P_I$) de l'image ($IM_k$) capturée,

il est prévu à l'étape c1), pour chacune desdites images ($IM_k$) à fusionner, de :

c11) projeter chaque point-image ($P_I$) de ladite image ($IM_k$) sur la sphère caractéristique ($US_k$) associée à la caméra (11, 12, 13, 14, 15) ayant capturé cette image ($IM_k$), puis de
c12) projeter, sur ladite surface tridimensionnelle (B), le point (P) obtenu à l'étape c11).

5. Procédé selon l'une des revendications 3 et 4, au cours duquel il est prévu :

- en présence d'un obstacle dans le champ de vision (Ch1) de la première caméra (11), de sélectionner une première orientation du plan virtuel (FPv), et
- en l'absence d'obstacle dans le champ de vision (Ch1) de la première caméra (11), de sélectionner une deuxième orientation dudit plan virtuel ($FP_V$) distincte de la première orientation.

6. Procédé selon l'une des revendications 1 à 5, au cours duquel l'unité de commande (10) détermine si un obstacle est présent ou non dans le champ de vision (Ch1) de la première caméra au moyen d'un détecteur d'obstacle (17) du véhicule (1) automobile, le détecteur d'obstacle (17) étant distinct desdites première et deuxième caméras (11, 12).

7. Véhicule (1) automobile comprenant une première caméra (11), une deuxième caméra (12), un écran d'affichage (16), et une unité de traitement (10) électronique, la première caméra (11) et la deuxième caméra (12) étant positionnées de telle sorte que leurs champs de vision respectifs (Ch1, Ch2) se recouvrent au moins partiellement,

**caractérisé en ce que** le champ de vision (Ch1) de la première caméra (11) est centré sur une première direction d'observation (x1) inclinée vers le sol et le champ de vision (Ch2) de la deuxième caméra (12) est centré sur une deuxième direction d'observation (x2) sensiblement horizontale,
l'unité de traitement (10) étant programmée pour :

- déterminer si un obstacle est présent ou non dans le champ de vision (Ch1) de la première caméra (11),
- en présence d'un obstacle dans le champ de vision (Ch1) de la première caméra (11), sélectionner la première caméra (11), et, en l'absence d'obstacle dans le champ de vision (Ch1) de la première caméra (11), sélectionner la deuxième caméra (12),
- générer une image (IMV1, IMV2) à afficher, en fonction d'une image (IM1, IM2) capturée par la caméra (11, 12) sélectionnée, et
- afficher l'image (IMV1, IMV2) générée sur l'écran (16) d'affichage.

**8.** Véhicule (1) automobile selon la revendication 7, dans lequel la première caméra (11) et la deuxième caméra (12) sont disposées de sorte que :

- une première zone de l'environnement (E) du véhicule (1), contenue dans le champ de vision (Ch1) de la première caméra (11), et
- une deuxième zone de l'environnement (E) du véhicule (1), contenue dans le champ de vision (Ch2) de la deuxième caméra (12)

s'étendent d'un même côté du véhicule (1) automobile, la première zone étant plus proche du véhicule automobile que la deuxième zone.

**9.** Véhicule (1) automobile selon la revendication 8, dans lequel il est prévu une troisième caméra (13, 14, 15) qui est disposée de sorte qu'une troisième zone de l'environnement (E) du véhicule (1), contenue dans le champ de vision (Ch3, Ch4, Ch5) de la troisième caméra, s'étende d'un autre côté du véhicule (1) automobile que lesdites première et deuxième zones, et dans lequel l'unité de traitement (10) est programmée pour générer l'image (IMV1, IMV2) à afficher en fusionnant l'image (IM1, IM2) capturée par la caméra (11, 12) sélectionnée avec une image (IM3, IM4, IM5) capturée par la troisième caméra (13, 14, 15).

**10.** Véhicule (1) automobile selon l'une des revendications 7 à 9, dans lequel l'une au moins desdites première et deuxième caméras (11, 12) est une caméra grand angle.


**Patentansprüche**

**1.** Verfahren zur Anzeige einer Umgebung (E) eines Kraftfahrzeugs (1) auf einem Bildschirm (16), der sich in dem Fahrzeug (1) befindet, wobei das Fahrzeug (1) eine erste Kamera (11) und eine zweite Kamera (12) beinhaltet, deren jeweilige Sichtfelder (Ch1, Ch2) sich mindestens teilweise überlappen, wobei das Sichtfeld (Ch1) der ersten Kamera (11) auf eine erste, zum Boden hin geneigte Beobachtungsrichtung (x1) zentriert ist und das Sichtfeld (Ch2) der zweiten Kamera (12) auf eine zweite, im Wesentlichen horizontale Beobachtungsrichtung (x2) zentriert ist, wobei das Verfahren die folgenden Schritte beinhaltet, die durch eine elektronische Verarbeitungseinheit (10) des Kraftfahrzeugs umgesetzt werden:

a) Bestimmen, ob in dem Sichtfeld (Ch1) der ersten Kamera (11) ein Hindernis vorhanden ist oder nicht,
b) bei Vorhandensein eines Hindernisses in dem Sichtfeld (Ch1) der ersten Kamera (11), Auswählen der ersten Kamera (11), und bei Nichtvorhandensein eines Hindernisses in dem Sichtfeld (Ch1) der ersten Kamera (11), Auswählen der zweiten Kamera (12),
c) Erzeugen eines anzuzeigenden Bildes (IMV1, IMV2) in Abhängigkeit von einem Bild (IM1, IM2), das durch die in Schritt b) ausgewählte Kamera (11, 12) erfasst wird, und
d) Anzeigen des in Schritt c) erzeugten Bildes (IMV1, IMV2) auf dem Bildschirm (16).

**2.** Verfahren nach Anspruch 1, bei dem das Bild (IMV1, IMV2) in Schritt c) durch das Zusammenführen von Folgendem erzeugt wird:

- des Bildes (IM1, IM2), das durch die in Schritt b) ausgewählte Kamera (11, 12) erfasst wird, mit
- einem Bild (IM3, IM4, IM5), das durch eine dritte Kamera (13, 14, 15) des Fahrzeugs (1) erfasst wird, sodass das anzuzeigende Bild (IMV1, IMV2) mindestens einen Teil des Bildes (IM1, IM2), das durch die ausgewählte Kamera (11, 12) erfasst wird, und mindestens einen Teil des Bildes (IM3, IM4, IM5), das durch die dritte Kamera (13, 14, 15) erfasst wird, umfasst.

**3.** Verfahren nach Anspruch 2, bei dem zum Zusammenführen der Bilder (IM1, IM2, IM3, IM4, IM5) Folgendes vorgesehen ist:

c1) Projizieren mindestens eines Teils des Bildes (IM1, IM2), das durch die ausgewählte Kamera (11, 12) erfasst wird, und mindestens eines Teils des Bildes (IM3, IM4, IM5), das durch die dritte Kamera (13) erfasst wird, auf eine konkave dreidimensionale Oberfläche (B), die mindestens einen Teil des Fahrzeugs (1) umgibt, um ein dreidimensionales Bild zu erhalten, und
c2) Projizieren des dreidimensionalen Bildes auf eine virtuelle Ebene ($FP_V$).

**4.** Verfahren nach Anspruch 3, bei dem:

eine charakteristische Sphäre ($US_k$) für jede von der ersten, der zweiten und der dritten Kamera (11, 12, 13, 14, 15) definiert werden kann, sodass die Erfassung eines beliebigen Bildes durch die Kamera (11, 12, 13, 14, 15) für jeden Objektpunkt ($P_o$) des Raums optisch äquivalent zu Folgendem ist:

- einer Projektion des Objektpunkts ($P_o$) auf die charakteristische Sphäre ($US_k$), um einen projizierten Objektpunkt (P) zu erhalten, dann
- einer Projektion, auf eine Brennebene ($FP_k$) der Kamera (11, 12, 13, 14, 15), des projizierten Objektpunkts (P), um einen Bildpunkt ($P_I$) des erfassten Bildes ($IM_k$) zu erhalten,

in Schritt c1) für jedes der zusammenzuführenden Bilder ($IM_k$) Folgendes vorgesehen ist:

c11) Projizieren jedes Bildpunkts ($P_I$) des Bildes ($IM_k$) auf die charakteristische Sphäre ($US_k$), die mit der Kamera (11, 12, 13, 14, 15), die dieses Bild ($IM_k$) erfasst hat, assoziiert ist, dann
c12) Projizieren, auf die dreidimensionale Oberfläche (B), des in Schritt c11) erhaltenen Punkts (P).

**5.** Verfahren nach einem der Ansprüche 3 und 4, bei dem Folgendes vorgesehen ist:

- bei Vorhandensein eines Hindernisses in dem Sichtfeld (Ch1) der ersten Kamera (11), Auswählen einer ersten Ausrichtung der virtuellen Ebene ($FP_V$), und
- bei Nichtvorhandensein eines Hindernisses in dem Sichtfeld (Ch1) der ersten Kamera (11), Auswählen einer zweiten Ausrichtung der virtuellen Ebene ($FP_V$), die sich von der ersten Ausrichtung unterscheidet.

**6.** Verfahren nach einem der Ansprüche 1 bis 5, bei dem die Steuereinheit (10) mit Hilfe einer Hinderniserkennungseinheit (17) des Kraftfahrzeugs (1) bestimmt, ob ein Hindernis in dem Sichtfeld (Ch1) der ersten Kamera vorhanden ist oder nicht, wobei sich die Hinderniserkennungseinheit (17) von der ersten und der zweiten Kamera (11, 12) unterscheidet.

**7.** Kraftfahrzeug (1), das eine erste Kamera (11), eine zweite Kamera (12), einen Bildschirm (16) und eine elektronische Verarbeitungseinheit (10) beinhaltet, wobei die erste Kamera (11) und die zweite Kamera (12) so positioniert sind, dass sich ihre jeweiligen Sichtfelder (Ch1, Ch2) mindestens teilweise überlappen, **dadurch gekennzeichnet, dass** das Sichtfeld (Ch1) der ersten Kamera (11) auf eine erste, zum Boden hin geneigte Beobachtungsrichtung (x1) zentriert ist und das Sichtfeld (Ch2) der zweiten Kamera (12) auf eine zweite, im Wesentlichen horizontale Beobachtungsrichtung (x2) zentriert ist,
wobei die Verarbeitungseinheit (10) für Folgendes programmiert ist:

- Bestimmen, ob ein Hindernis in dem Sichtfeld (Ch1) der ersten Kamera (11) vorhanden ist oder nicht,
- bei Vorhandensein eines Hindernisses in dem Sichtfeld (Ch1) der ersten Kamera (11), Auswählen der ersten Kamera (11), und bei Nichtvorhandensein eines Hindernisses in dem Sichtfeld (Ch1) der ersten Kamera (11), Auswählen der zweiten Kamera (12),
- Erzeugen eines anzuzeigenden Bildes (IMV1, IMV2) in Abhängigkeit von einem Bild (IM1, IM2), das durch die ausgewählte Kamera (11, 12) erfasst wird, und
- Anzeigen des erzeugten Bildes (IMV1, IMV2) auf dem Bildschirm (16).

**8.** Kraftfahrzeug (1) nach Anspruch 7, wobei die erste Kamera (11) und die zweite Kamera (12) so angeordnet sind, dass sich:

- ein erster Bereich der Umgebung (E) des Fahrzeugs (1), der in dem Sichtfeld (Ch1) der ersten Kamera (11) enthalten ist, und
- ein zweiter Bereich der Umgebung (E) des Fahrzeugs (1), der in dem Sichtfeld (Ch2) der zweiten Kamera (12) enthalten ist,

auf einer gleichen Seite des Kraftfahrzeugs (1) erstrecken, wobei der erste Bereich dem Kraftfahrzeug näher ist als der zweite Bereich.

**9.** Kraftfahrzeug (1) nach Anspruch 8, wobei eine dritte Kamera (13, 14, 15) vorgesehen ist, die so angeordnet ist, dass sich ein dritter Bereich der Umgebung (E) des Fahrzeugs (1), der in dem Sichtfeld (Ch3, Ch4, Ch5) der dritten Kamera enthalten ist, auf einer anderen Seite des Kraftfahrzeugs (1) als der erste und der zweite Bereich erstreckt, und wobei die Verarbeitungseinheit (10) dazu programmiert ist, das anzuzeigende Bild (IMV1, IMV2) durch das Zusammenführen des Bildes (IM1, IM2), das durch die ausgewählte Kamera (11, 12) erfasst wird, mit einem Bild (IM3, IM4, IM5), das durch die dritte Kamera (13, 14, 15) erfasst wird, zu erzeugen.

**10.** Kraftfahrzeug (1) nach einem der Ansprüche 7 bis 9, wobei mindestens eine von der ersten und der zweiten Kamera (11, 12) eine Weitwinkelkamera ist.

## Claims

1. Method for displaying an environment (E) of a motor vehicle (1) on a display screen (16) located in the vehicle (1), the vehicle (1) comprising a first camera (11) and a second camera (12) the respective fields of view (Ch1, Ch2) of which overlap at least partially, the field of view (Ch1) of the first camera (11) being centred on a first observation direction (x1) that is inclined towards the ground and the field of view (Ch2) of the second camera (12) being centred on a second observation direction (x2) that is substantially horizontal, the method comprising the following steps, implemented by an electronic processing unit (10) of the motor vehicle:

   a) determining whether or not an obstacle is present in the field of view (Ch1) of the first camera (11),
   b) if there is an obstacle in the field of view (Ch1) of the first camera (11), selecting the first camera (11), and, if there is no obstacle in the field of view (Ch1) of the first camera (11), selecting the second camera (12),
   c) generating an image (IMV1, IMV2) to be displayed, depending on an image (IM1, IM2) captured by the camera (11, 12) selected in step b), and
   d) displaying the image (IMV1, IMV2) generated in step c) on said screen (16).

2. Method according to Claim 1, wherein the image (IMV1, IMV2) is generated in step c) by fusing:

   - the image (IM1, IM2) captured by the camera (11, 12) selected in step b) with
   - an image (IM3, IM4, IM5) captured by a third camera (13, 14, 15) of the vehicle (1),

   in such a way that the image (IMV1, IMV2) to be displayed contains at least one portion of the image (IM1, IM2) captured by the selected camera (11, 12), and at least one portion of the image (IM3, IM4, IM5) captured by the third camera (13, 14, 15).

3. Method according to Claim 2, wherein provision is made, to fuse said images (IM1, IM2, IM3, IM4, IM5), to:

   c1) project at least one portion of the image (IM1, IM2) captured by the selected camera (11, 12) and at least one portion of the image (IM3, IM4, IM5) captured by the third camera (13) onto a concave three-dimensional surface (B) encircling at least one portion of the vehicle (1), so as to obtain a three-dimensional image, and to
   c2) project said three-dimensional image onto a virtual plane ($FP_V$).

4. Method according to Claim 3, wherein:

   a characteristic sphere ($US_k$) being able to be defined for each of the first, second and third cameras (11, 12, 13, 14, 15) so that capture of any image by said camera (11, 12, 13, 14, 15) is optically equivalent, for each object-point ($P_o$) in space, to:

      - a projection of said object-point ($P_o$) onto said characteristic sphere ($US_k$) so as to obtain a projected object-point (P), and then to
      - a projection, onto a focal plane ($FP_k$) of said camera (11, 12, 13, 14, 15), of the projected object-point (P) so as to obtain an image-point ($P_l$) of the captured image ($IM_k$),

   provision is made, in step c1), for each of said images ($IM_k$) to be fused, to:

      c11) project each image-point ($P_l$) of said image ($IM_k$) onto the characteristic sphere ($US_k$) associated with the camera (11, 12, 13, 14, 15) having captured this image ($IM_k$), then to
      c12) project, onto said three-dimensional surface (B), the point (P) obtained in step c11).

**5.** Method according to either of Claims 3 and 4, wherein provision is made:

- if there is an obstacle in the field of view (Ch1) of the first camera (11), to select a first orientation of the virtual plane (FP$_v$), and
- if there is no obstacle in the field of view (Ch1) of the first camera (11), to select a second orientation of said virtual plane (FP$_v$) distinct from the first orientation.

**6.** Method according to one of Claims 1 to 5, wherein the control unit (10) determines whether or not an obstacle is present in the field of view (Ch1) of the first camera by means of an obstacle sensor (17) of the motor vehicle (1), the obstacle detector (17) being distinct from said first and second cameras (11, 12).

**7.** Motor vehicle (1) comprising a first camera (11), a second camera (12), a display screen (16) and an electronic processing unit (10), the first camera (11) and the second camera (12) being positioned such that their respective fields of view (Ch1, Ch2) overlap at least partially,

**characterized in that** the field of view (Ch1) of the first camera (11) is centred on a first observation direction (x1) that is inclined towards the ground and the field of view (Ch2) of the second camera (12) is centred on a second observation direction (x2) that is substantially horizontal,
the processing unit (10) being programmed to:

- determine whether or not an obstacle is present in the field of view (Ch1) of the first camera (11),
- if there is an obstacle in the field of view (Ch1) of the first camera (11), select the first camera (11), and, if there is no obstacle in the field of view (Ch1) of the first camera (11), select the second camera (12),
- generate an image (IMV1, IMV2) to be displayed, depending on an image (IM1, IM2) captured by the selected camera (11, 12), and
- display the generated image (IMV1, IMV2) on the display screen (16).

**8.** Motor vehicle (1) according to Claim 7, wherein the first camera (11) and the second camera (12) are placed so that:

- a first region of the environment (E) of the vehicle (1), which region is contained in the field of view (Ch1) of the first camera (11), and
- a second region of the environment (E) of the vehicle (1), which region is contained in the field of view (Ch2) of the second camera (12)

lie on the same side of the motor vehicle (1), the first region being closer to the motor vehicle than the second region.

**9.** Motor vehicle (1) according to Claim 8, wherein provision is made for a third camera (13, 14, 15) that is placed so that a third region of the environment (E) of the vehicle (1), which region is contained in the field of view (Ch3, Ch4, Ch5) of the third camera, lies on a side of the motor vehicle (1) other than said first and second regions, and wherein the processing unit (10) is programmed to generate the image (IMV1, IMV2) to be displayed by fusing the image (IM1, IM2) captured by the selected camera (11, 12) with an image (IM3, IM4, IM5) captured by the third camera (13, 14, 15).

**10.** Motor vehicle (1) according to one of Claims 7 to 9, wherein at least one of said first and second cameras (11, 12) is a wide-angle camera.

# Fig.1

# Fig.2

Fig.4

Fig.3

**Fig.5**

**Fig.6**

IM2

IM1

IM4

IM3

IM5

**Fig.7**

IMV1

**Fig.8**

IMV2

**EP 3 682 320 B1**

## RÉFÉRENCES CITÉES DANS LA DESCRIPTION

**Documents brevets cités dans la description**

- EP 2620917 A
- EP 3009302 A2

- JP 2010103810 A, RICOH KK